# EUROPEAN PATENT SPECIFICATION

(11) **EP 1 515 523 B1**
(45) Date of publication and mention of the grant of the patent: **12.12.2007**
(21) Application number: 03020683.3
(22) Date of filing: 11.09.2003
(51) Int. Cl.: H04M 1/02, E05D 7/10

(54) **Locking mechanism for a foldable electronic device**
Verriegelungseinrichtung für ein klappbares elektronisches Gerät
Dispositif de verrouillage pour un appareil électronique pliable

(43) Date of publication of application: 16.03.2005
(73) Proprietor: Sony Ericsson Mobile Communications AB, 221 88 Lund (SE)
(72) Inventor: Nordenskjöld, Kjell, 114 55 Stockholm (SE)
(74) Representative: Dahnér, Christer

(56) References cited:
- EP-A- 1 307 031
- US-A- 5 761 300
- US-A- 6 123 401
- US-B1- 6 256 481

## Description

### TECHNICAL FIELD OF THE INVENTION

The present invention relates to a locking mechanism. More particularly it relates to a locking mechanism for holding and releasing a flipping section and a main section of a portable electronic device as well as a portable electronic device comprising a locking mechanism.

### DESCRIPTION OF RELATED ART

In order to provide a cover for parts of portable electronic devices, such as mobile phones, some mobile phones are equipped with a cover that is foldable onto typically the upper part of the phone. This cover or flipping section can comprise a key-pad or other functionality. However, some applications do not gain from this cover and rather this cover can be an obstacle for gaming and PDA-associated applications. Therefore, these covers are therefore provided to be detachable from the mobile phone.

In reality this detaching of the cover or flipping section is often more easily said than done and if at all possible this operation requires a considerable amount of effort, which in reality prevents the user from detaching the cover. Having this cover continuously mounted on the mobile phone therefore limits the usability and versatility of said mobile phone.

For this reason it would be advantageous if this cover or flipping section could be detached and reattached with ease.

It would also be an advantage to have the flipping section securely attached to the body of the mobile phone, when the user does not want to disengage the flipping section from the phone.

EP 1 307 031 describes a telephone that includes a panel unit disposed on an upper cabinet portion of a telephone body. The panel unit is angularly displaceable about a rotation axis over an angular range including a predetermined angular position, and is attachable to and detachable from the telephone body when the panel unit is in the predetermined position. A cabinet cover member that is detachably attached to the upper cabinet portion prevents the panel unit from being detached from the telephone body.

There is thus a need for providing a mechanism enabling easy and simple detaching and reattaching of said flip in relation to a portable electronic device, and enabling the flipping section to be securely attached to the body of the portable electronic device.

### SUMMARY OF INVENTION

The invention is thus directed towards solving the problem of providing functionality in a portable electronic device through which a flipping section is easily detachable from and reattachable to said portable electronic device, which functionality further enables the flipping section to be securely attached to a main section of the portable electronic device in normal use.

This is achieved by providing locking functionality with which a flipping section is held or is released relative to a main section of a portable electronic device, dependent on the foldable position of the flipping section relative to said main section.

One object of the present invention is thus to provide a portable electronic device in which a flipping section is easily detachable from and reattachable to a main section of said portable electronic device, and that said flipping section can be safely attached to the main section, preventing the flipping section to be detached in normal use.

According to a first aspect of this invention, this object is achieved by a portable electronic device comprising:
- a main section with electronic circuitry,
- a detachable flipping section foldably mounted around an axis of rotation relative to said main section such that the flipping section can be folded in a first position wherein the flipping section is detachable and reattachable, and
- a locking mechanism provided with a resilient member, which resilient member is arranged such that it orients, by action of the resilience of said member, the flipping section in a second position, which looking mechanism further is arranged to prevent the flipping section from being detached from the main section within a position range comprising the second position.

This aspect of the present invention has the advantage that the flipping section easily is detachable from and reattachable to the main section, and that the flipping section is folded such that it is prevented from being detached from the main section.

A second aspect of the present invention is directed towards a portable electronic device including the features of the first aspect, wherein the locking mechanism further comprises a first locking combination comprising a first recess in the flipping section and a corresponding first tap in the main section, and a second locking combination comprising a second recess in the main section and a second corresponding tap in the flipping section, wherein the resilient member acts on at least one of said two locking combinations.

A third aspect of the present invention is directed towards a portable electronic device including the features of the second aspect, wherein wherein the recess of the first locking combination and the recess of the second locking combination are anti-parallel relative to each other in the first position, and that at least one tap or recess includes a track, with which the resilient member is arranged to mate, in order to provide the flipping section in the second position.

A fourth aspect of the present invention is directed towards a portable electronic device including the features of the third aspect, wherein in the first position the recesses are at least partially provided in a plane that comprises the axis of rotation around which the flipping section is foldable relative to the main section.

A fifth aspect of the present invention is directed towards a portable electronic device including the features of the first aspect, wherein the resilient member is provided in the main section.

A sixth aspect of the present invention is directed towards a portable electronic device including the features of second aspect, wherein the track is provided in said second tap.

A seventh aspect of the present invention is directed towards a portable electronic device including the features of the first aspect, wherein the flipping section can be folded in a third position, in which the resilient member, by action of its resilience, urges the flipping section to cover at least part of the main section.

An eighth aspect of the present invention is directed towards a portable electronic device including the features of the first aspect, in which the resilient member is a plate spring.

A ninth aspect of the present invention is directed towards a portable electronic device including the features of the eighth aspect, in which the plate spring is made of a metal.

A tenth aspect the present invention is directed towards a portable electronic device including the features of the ninth aspect, in which the metal is spring steel.

An eleventh aspect of the present invention is directed towards a portable electronic device including the features of the eighth aspect, in which the plate spring is made of plastics.

Another object of the present invention is thus to provide a locking mechanism with which the flipping section is easily detachable from and reattachable to the main section of the portable electronic device, and that said flipping section can be safely attached to the main section, preventing the flipping section to be detached.

According to a twelfth aspect the present invention, this object is achieved by a locking mechanism for holding and releasing a flipping section and a main section of a portable electronic device where the flipping section is detachably attached to a main section having electronic circuitry, which detachable flipping section is foldably mounted around an axis of rotation relative to said main section, wherein the locking mechanism:
- allows the flipping section to be detached from the main section in a first position, and
- further comprises a resilient member that orients, by action of the resilience of said member, the flipping section in a second position, and
- further prevents said flipping section from being detached from to the main section within a position range comprising the second position.

The present invention has the following advantages. A flipping section of a portable electronic device is easily detachable from and reattachable to a main section of said portable electronic device. The flipping section is safely attached to the main section by a locking mechanism, unless mild force is applied by a user, upon detaching the flipping section from the main section. The locking mechanism further has the advantage of comprising few moving parts, and is therefore cheap, simple and requires little space.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 is a perspective view of a portable electronic device in a semi-open state;
fig. 2 is a view from below of a locking mechanism of a portable electronic device, having the flipping section detached from the main section of the portable electronic device;
fig. 3 is a perspective view from below of the locking mechanism of a portable electronic device, showing the flipping section detached from the main section;
fig. 4 is a side view of the locking mechanism of a portable electronic device with the flipping section attached to the main section with the flipping section folded in a first position;
fig. 5 is a perspective top-side view of the locking mechanism of a portable electronic device with the flipping section in the first position;
fig. 6 shows the locking mechanism of a portable electronic device from below, with the flipping section folded in the first position;
fig. 7 is a side view of the locking mechanism of a portable electronic device with the flipping section folded in the second position, relative to the main section;
fig. 8 is a view from below of the locking mechanism of a portable electronic device, showing the flipping section folded in the second position relative to the main section;
fig. 9 shows the locking mechanism of a portable electronic device from above with the flipping section folded in a closed third position, and
fig. 10 is a view from below of said locking mechanism of a portable electronic device having the flipping section folded in the closed third position.

### DETAILED DESCRIPTION OF THE EMBODIMENTS

The present invention relates to the provision of a locking mechanism for the usage in a portable electronic device. In the following the portable electronic device will be described in relation to a mobile phone. However it should be realized that it can be any one of a variety of devices like a personal digital assistant (PDA), a portable phone, a game box of any kind etc.

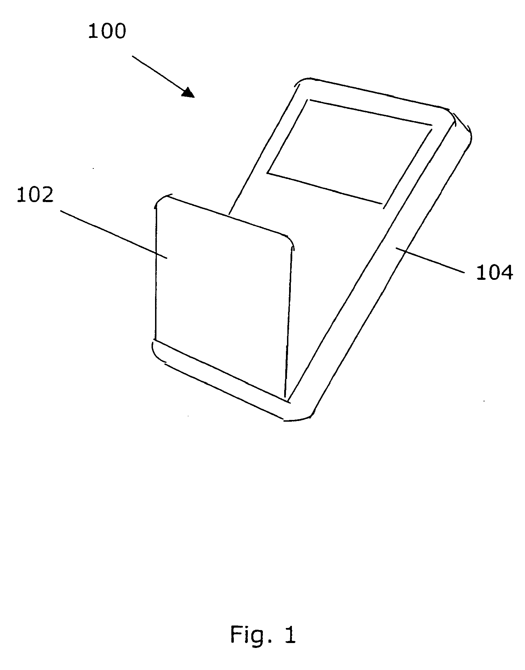

Reference will now be given to fig. 1 schematically showing a portable electronic device, 100, according to one preferred embodiment of the invention, equipped with a flipping section, 102, according to one preferred embodiment of the invention.

In this figure the portable electronic device, 100, being in a semi-open state, comprises a first or flipping section, 102, and a second or main section, 104, which flipping section, 102, is mounted foldably around an axis of rotation relative to the main section.

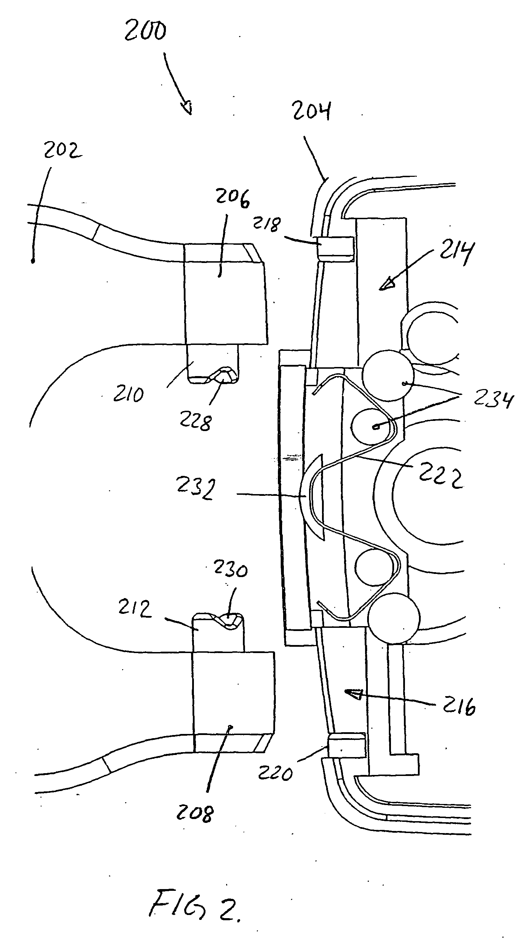

Figure 2 shows a bottom view of a locking mechanism of a portable electronic device, 200, wherein the flipping section, 202, is shown detached from the main section, 204. The flipping section, 202, is here provided with a first and a second locking arm, 206 and 208, respectively. The first and second locking arm, 206 and 208, is further provided with a first and second inner tap, 210 and 212, respectively.

The main section, 204, shown from below, is provided with a first and a second locking arm-receiving area, 214 and 216, that further is provided with a first and a second outer tap, 218 and 220, respectively. The locking arm-receiving area, 214, and 216, is also provided with a first and a second inner groove or recess, (not shown) arranged to mate the first and second inner taps, 210 and 212, of the flipping section, 202. Similarly, the flipping section is furthermore provided with a first and a second outer groove or recess (not shown) arranged to mate the first and the second outer tap, 218 and 220, respectively, in the first and the second locking arm-receiving area, 214 and 216, respectively, of the main section. The main section is also equipped with a plate spring, 222, oriented to meet the first and second locking arm, 206 and 208, in the first and second locking arm-receiving area, 214 and 216, respectively. The main section, 204, is furthermore provided with plate spring biasing means, 232 and 234, which are arranged to hold and orient the plate spring, 222, in a proper position for enabling mating the first and second inner taps, 210 and 212.

In the same figure, fig. 2, it is seen that the first inner tap, 210, of the flipping section, 202, is provided with a recessing track, 228, and the second inner tap, 212, is provided with a recessing track, 230. These recessing tracks are provided in the flipping section, 202, in order for the plate spring, 222, as provided in the main section, 204, to actuate the position of the foldable flipping section, 202, whenever the flipping section, 202, is attached to the main section 204. This actuation is explained in more detail below.

The inner and outer taps, 210 and 212, and 218 and 220, respectively, as shown in fig. 2 are according to the preferred embodiment circular in shape. However, any semi-circular or even non-circular shape is just as well applicable in this invention.

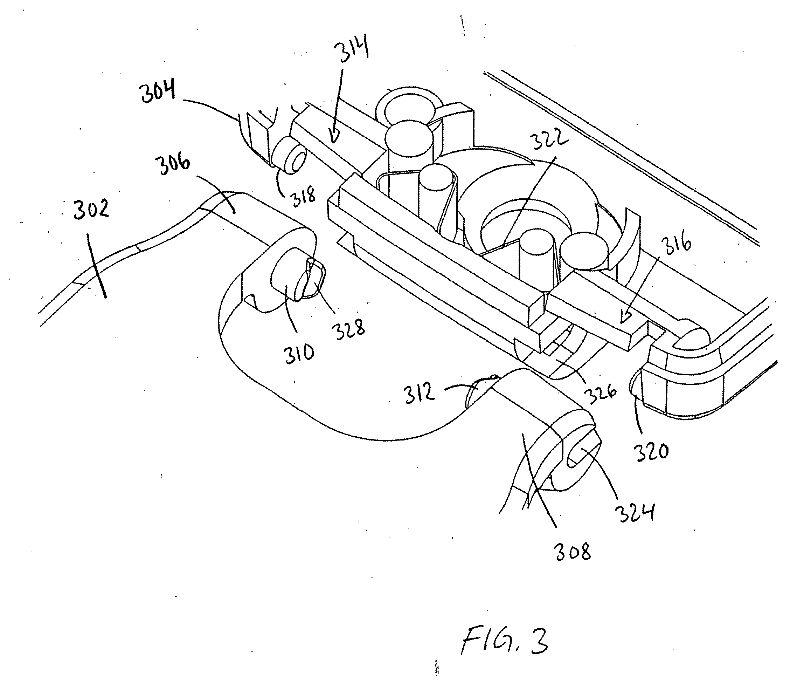

Fig. 3 is a perspective view from below of the locking mechanism of a portable electronic device having the flipping section, 302, detached from the main section, 304. This figure visualizes the elements of the locking mechanism comprised in each one of the first and the second locking arms, 306 and 308, and also each one of the first and second locking-arm receiving areas, 314 and 316, respectively.

In the following a few functional features of the locking mechanism according to the present invention are described. In the second locking arm, 308, of the flipping section, 302, is provided one outer groove or recess, 324, one the outer side of said second locking arm, 308, and in the corresponding locking arm-receiving area, 316, on one side thereof, is provided an inner groove or recess, 326. These grooves are each provided to meet a corresponding tap in the locking mechanism. The outer groove, 324, in the locking arm, 308, is formed for mating with the outer tap, 320, in the locking arm-receiving area, 316, and the inner groove, 326, in the locking arm-receiving area, 316, is formed for mating with the inner tap, 312, of the locking arm, 308.

The inner taps provided on flipping section, 302, that is the first inner tap, 310, and the second inner tap, 312, are provided with a first and second recessing track, 328 and 330, respectively, as described in relation to fig. 2. These recessing tracks, 328 and 330, are provided such that they form an angle to each of the two ends of the plate spring, 322, when the flipping section, 302, is folded in the first position. There is hence a non-alignment of the ends of the plate spring, 322, and the recessing tracks, 328 and 330.

With the foldable flipping section in a position in which the flipping section is detachable from and reattachable to the main section of the portable electronic device, the outer groove, 324, of the flipping section, 302, is directed anti-parallel as compared to the inner groove, 326, of the main section, 304. In this position of the foldable flipping section, 302, relative to the main section, 304, the inner tap, 312, of the flipping section, 302, meets the inner groove, 326, of the main section, 304, and the outer tap, 320, of the main section, 304, meets the outer groove, 324, of the flipping section, 302, upon attaching a detached flipping section, 302, onto the main section, 304. This position in which the flipping section, 302, is detachable from and reattachable to the main section, 304, is in this invention called the first position.

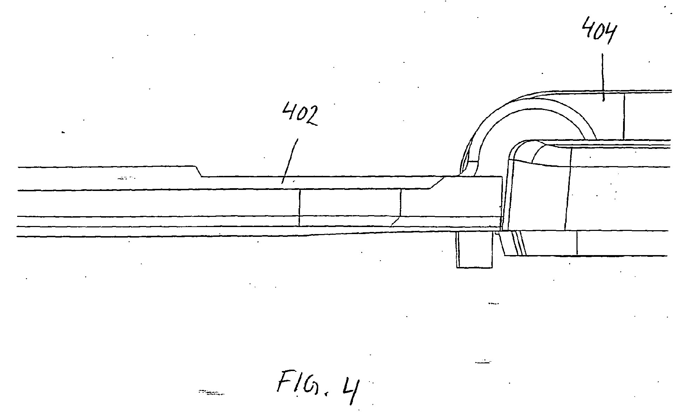

Fig. 4 shows a side view of the locking mechanism of a portable electronic device with the flipping section, 402, attached to the main section, 404, and the flipping section, 402, folded into the first position, in which the flipping section, 402, is detachable from and reattachable to the main section, 404.

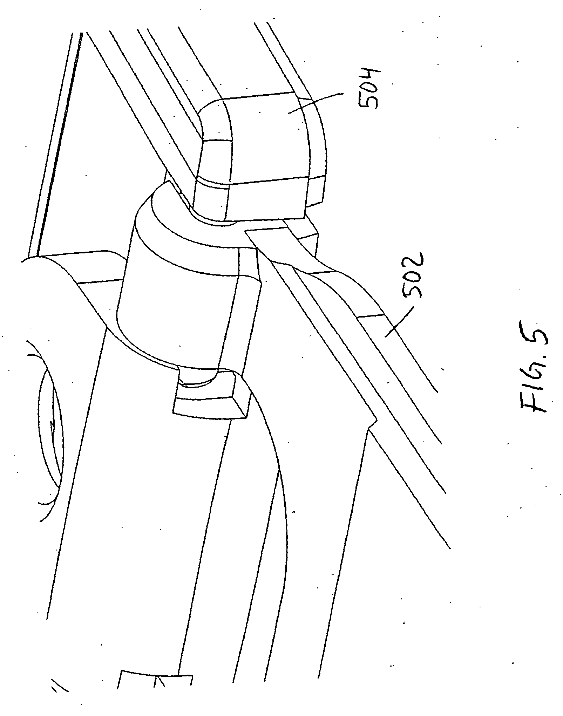

Fig. 5 is a perspective side-top view of the locking mechanism of a portable electronic device having the flipping section, 502, folded in the first position. This position is the same as the one of fig. 4.

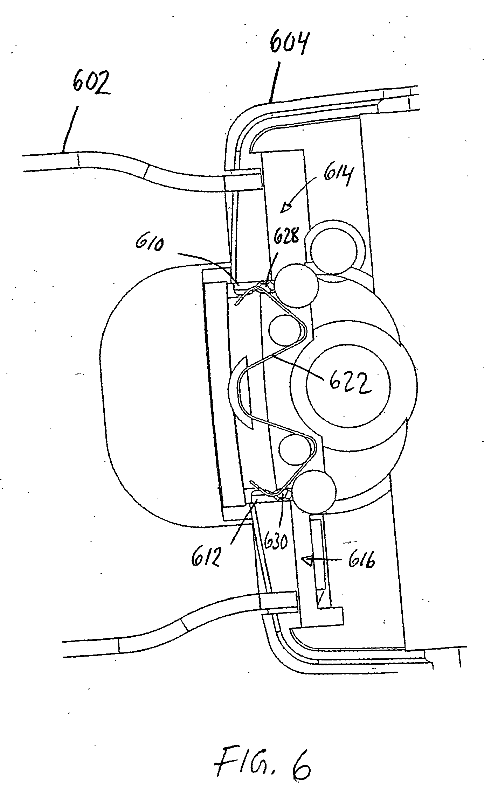

Fig. 6 shows the locking mechanism of a portable electronic device according to the present invention from below, having the flipping section, 602, attached to the main section, 604, which flipping section, 602, is folded in the first position. As this figure essentially shows the same features as figs. 2 and 3, the reference numerals provided in said two figures are applicable in this figure. For this reason some features present in fig. 6 may not be explicitly referenced.

In fig. 6, it is seen that the recessing track, 628, of the first inner tap, 610, does not fully mate with the plate spring, 622, in the first locking arm-receiving area, 614. In the same way it is seen that the recessing track, 630, of the second inner tap, 612, also does not fully mate with the plate spring, 622, in the second locking arm-receiving area, 616. This absence of full mating of the tracks, 628 and 630, with the plate spring, 622, is due to the folded position of the flipping section, 602, orienting the slopes of each track, 628 and 630, respectively, in a position that does not allow fully mating with the provided plate spring, 622, of the main section, 604. In the first position of the flipping section, 602, the plate spring, 622, and the recessing tracks, 628 and 630, can simply not fully mate.

However, due to the resilience of the plate spring, 622, it acts on said mentioned slopes of each recessing track, 628 and 630, such that the flipping section, 602, via the first and second inner taps, 610 and 612, respectively, changes its first position and acquires a different second position, in which the orientation of the slopes of said tracks, 628 and 630, relative to the plate spring, 622, is different.

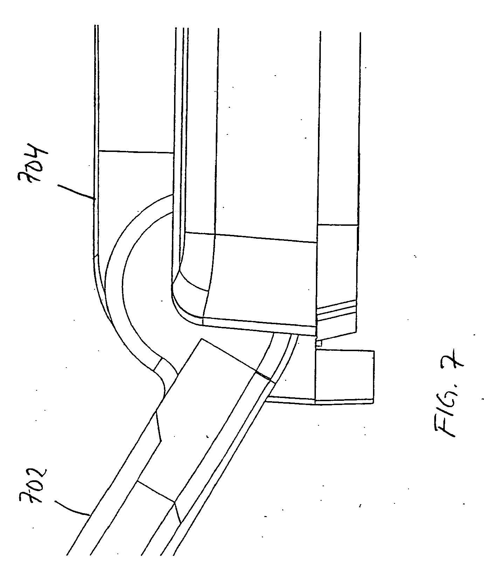

In fig. 7 this second position of the flipping section, 702, is shown relative to the main section, 704, of the locking mechanism of the portable electronic device.

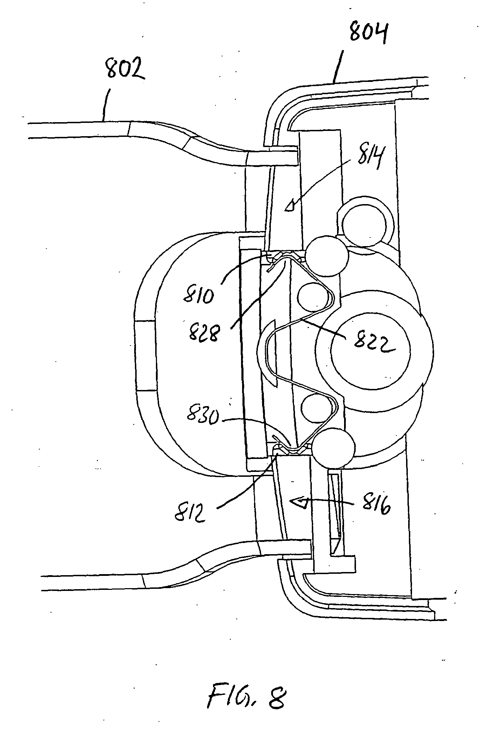

Fig. 8 is a view from below of locking mechanism of a portable electronic device having the flipping section, 802, still folded relative to the main section, 804, in the second position. As this figure essentially shows the same features as figs. 2 and 3, the reference numerals provided in said two figures are applicable in this figure. For this reason some features present in fig. 8 may not be explicitly referenced in relation to this figure.

It can clearly be seen, in this second folded position, of the flipping section, 802, that the recessing track, 828, of the first inner tap, 810, and the recessing track, 830, of the second inner tap, 812, now fully mate with each other, in contrast to the relative orientation of the tracks, 628 and 630, and the plate spring, 622, in fig. 6. The recessing tracks, 828 and 830, of the flipping section, 802, are hence aligned with the plate spring, 822, in the first and second locking arm-receiving areas, 814 and 816, respectively, of the main section, 804, when the flipping section, 802, is in the second position.

In fig. 8, due to the resilience of this plate spring, 822, this second position is a stable position, again in contrast to the first position of the flipping section, 802, which is an unstable position, in which the plate spring, 822, is urging the flipping section, 802, to acquire said second position.

Moreover, considering the second inner and outer grooves or recesses, 326 and 324, respectively, from fig. 3, and the necessity of these grooves being anti-parallel with other in order for the flipping section, 302, to be detachable from and reattachable to the main section, 304, it is understood that the change in orientation of the flipping section, 802, relative to the main section, 804, from the first to another position, for instance the second position, as exemplified in fig. 8, further leads to that the flipping section, 802, is neither detachable from or attachable to (when being detached) the main section, 804, in this second position. Rather, the flipping section, 802, is locked to the main section, 804, such that it is not possible to detach.

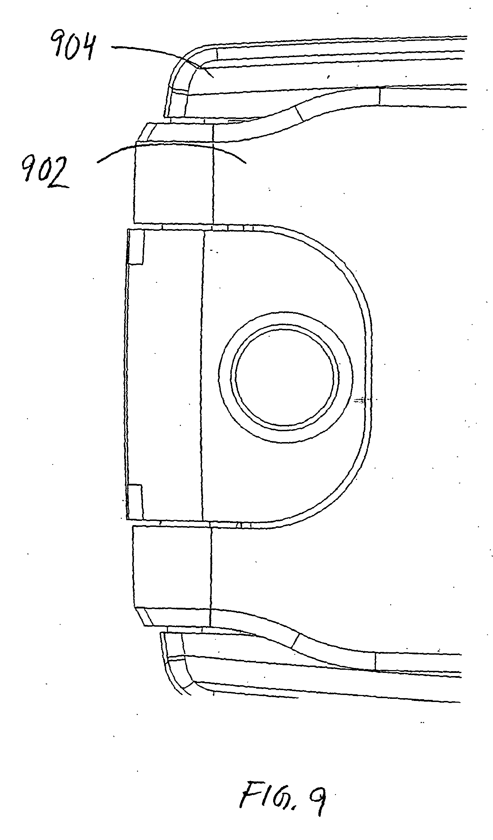

The flipping section can furthermore be folded in a closed third position, which position is acquired of the flipping section, 902, relative to the main section, 904, of the locking mechanism of a portable electronic device, as shown in fig. 9. This figure is a view from above showing the closed flipping section, 902, on top of, and thereby at least parts of, the main section, 904.

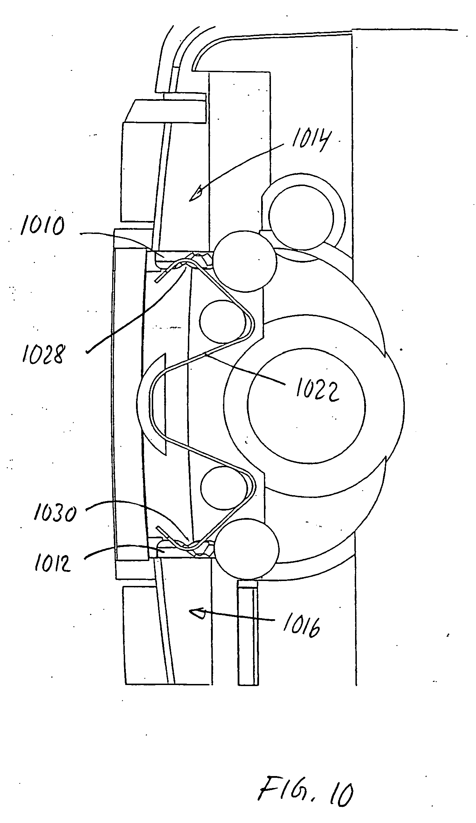

The locking mechanism of a portable electronic device having the flipping section, 1002, oriented in the same closed third position is depicted in fig. 10, is shown from below. As this figure essentially shows the same features as figs. 2 and 3, the reference numerals provided in said two figures are applicable in this figure. For this reason some features present in fig. 10 may not be explicitly referenced. However these can therefore be found in either fig. 2 or 3.

It can be seen clearly that the recessing track, 1028, of the first inner tap, 1010, again does not fully mate the plate spring, 1022, in the first locking arm-receiving area, 1014. The same is seen for the recessing track, 1030, of the second inner tap, 1012, in relation to the plate spring, 1022, in the second locking arm-receiving area, 1016. Due to non-alignment of these tracks, 1028 and 1030, with the plate spring, 1022, said plate spring, 1022, again acts on the slopes of these recessing tracks, 1028 and 1030, because of the resilience of said plate spring, 1022. The orientation of the flipping section, 1002, can not be changed as a result of this action of the plate spring, 1022, unless mild force is applied, since the third position is already the closed position of the flipping section, 1002. However, this action performed by the plate spring, 1022, prevents the flipping section, 1002, from changing its position from the closed third position. Hence, the flipping section, 1022, maintains on top of the main section, as for instance a covering element.

The force of the plate spring, 1022, is small enough to that the user can easily fold and unfold the flipping section, 1002, in the different positions, while it is big enough to urge said flipping section, 1002, into either the second or third positions, in absence of such force.

Above was described a locking mechanism having two locking arm - locking arm-receiving areas sets. While this embodiment is preferred it is understood that only one such locking arm locking arm-receiving area set is sufficient for gaining the advantages of the locking mechanism of the present invention. In each such locking arm -locking arm-receiving area set, an outer groove is arranged to mate an outer tap, and an inner groove is arranged to mate an inner tap, for instance the first outer groove being arranged to mate the first outer tap, and the first inner groove being arranged to mate the first inner tap.

Such locking arm - locking arm-receiving area set can be regarded as two locking combinations, where each one of said two locking combinations contains one tap and one recess that are arranged to mate with each other. For this reason a nomenclature of, for instance, a first and a second locking mechanism can be used. The first locking mechanism intends either a locking mechanism comprising the first outer recess arranged to mate the first outer tap, or a locking mechanism comprising the second outer recess arranged to mate the second outer tap. With the second locking mechanism is in the same way intended a locking mechanism comprising the first inner recess arranged to mate the first inner tap, or a locking mechanism comprising the second inner recess arranged to mate the second inner tap.

It is emphasized that this invention can be varied in many ways, of which the alternative embodiments below only are examples of a few. These different embodiments are hence non-limiting examples. The scope of this present invention, however, is only limited by the subsequently following claims.

According to another embodiment, the locking mechanism is provided with more than one resilient member or spring, in either the main section of a portable electronic device, the flipping section, or both of the main section and the flipping section main of said device.

According to another embodiment, the track provided in the tap, is a protruding track that is arranged to align with a spring provided with a recess, where said spring is provided in a recess that is arranged to mate with the tap. This means that the spring has a recessing track and the tap has a protrusion arranged to align with said recessing track or groove.

According to another embodiment, the track is provided in a recess, which recess is arranged to mate a corresponding tap.

According to yet another embodiment, the resilient member(s) act(s) on the outer locking combination(s).

According to yet another embodiment, the outer tap of a locking combination is provided in the locking arm of the flipping section, and the outer recess, arranged to mate said outer tap, is provided in the locking arm-receiving area of the main section.

According to still yet another embodiment, the inner tap of a locking combination is provided in the locking arm-receiving area of the main section, and the inner recess, arranged to mate with said inner tap, is provided in locking arm of the flipping section.

According to still yet another embodiment, non-circularly shaped outer and/or inner taps are provided in the locking arm and/or the locking arm-receiving area, by chamfering at least one side of said taps. Performing this chamfering perpendicularly to the rotational axis of the tap in question, that is on its envelope surface, and by orienting the resilient member arranged to mate the chamfered tap, such that it acts on the envelope surface of the tap, an alternative embodiment of the locking mechanism according to this present invention is obtained. Shaping at least part of one of said taps with or instance two or three chamferings, thus obtaining planar areas on the envelope surface of said tap, for instance obtaining a triangular shape, two or three foldable positions of a flipping section are obtained, into which the resilient member or spring urges said flipping section.

According to still another embodiment, the flipping section is electrified by providing a trailing contact within a locking combination, via a groove and a tap, connecting the main section with the flipping section electrically.

With the present invention has thus been described a portable electronic device having a locking mechanism having the following advantages:

The flipping section of the portable electronic device is easily detachable from and reattachable to the main section of said portable electronic device.

The flipping section is safely attached to the main section by the locking mechanism, unless mild force is applied by a user, when detaching the flipping section from the main section.

The locking mechanism further has the advantage of comprising few moving parts, and is therefore cheap, simple and requires little space.

## Claims

1. A locking mechanism for holding and releasing a flipping section (202) and a main section (204) of a portable electronic device where the flipping section is detachably attached to a main section having electronic circuitry, which detachable flipping section is foldably mounted around an axis of rotation relative to said main section, wherein the locking mechanism:
- is adapted to allow the flipping section (202) to be detached from the main section (204) in a first position, and
- further comprises a resilient member (222) that is adapted to orient, by action of the resilience of said member, the flipping section (202) in a second position, and
- is adapted to further prevent said flipping section (202) from being detached from the main section (204) within a position range comprising the second position,
**characterized by**
further comprising a first locking combination comprising a first recess (324) in the flipping section (302) and a corresponding first tap (320) in the main section (304), and a second locking combination comprising a second recess (326) in the main section and a second corresponding tap (312) in the flipping section, wherein the resilient member is adapted to act on at least one of said two locking combinations.

2. Locking mechanism according to claim 1, wherein the recess (324) of the first locking combination and the recess (326) of the second locking combination are anti-parallel relative to each other in the first position, and that at least one tap or recess includes a track (228, 230, 328), with which the resilient member (222, 322) is arranged to mate, in order to provide the flipping section in the second position.

3. Locking mechanism according to claim 2, wherein in the first position the recesses (324, 326) are at least partially provided in a plane that comprises the axis of rotation around which the flipping section (302) is foldable relative to the main section (304).

4. Locking mechanism according to any previous claim, wherein the resilient member (222) is provided in the main section (204).

5. Locking mechanism according to any previous claim, wherein a track (228, 230) is provided in said second tap (210, 212).

6. Locking mechanism, according to claim 2 or 3, wherein the flipping section (902) can be folded in a third position, in which the resilient member (222), by action of its resilience, urges the flipping section (902) to cover at least part of the main section (904).

7. Locking mechanism according to any of the preceding claims, in which the resilient member is a plate spring.

8. Locking mechanism according to claim 7, in which the plate spring is made of a metal.

9. Locking mechanism according to claim 8, in which the metal is spring steel.

10. Locking mechanism according to claim 7, in which the plate spring is made of plastics.

11. Portable electronic device comprising a locking mechanism according to any previous claim.

## Patentansprüche

1. Verriegelungsvorrichtung zum Festhalten und Entriegeln eines Klappabschnitts (202) und eines Hauptabschnitts (204) eines tragbaren elektronischen Geräts, wobei der Klappabschnitt an dem Hauptabschnitt lösbar angebracht ist, der eine elektronische Schaltung enthält,
wobei der lösbare Klappabschnitt um eine Drehachse in Bezug auf den betreffenden Hauptabschnitt klappbar angebracht ist,
wobei die Verriegelungsvorrichtung
- imstande ist, dem Klappabschnitt (202) zu ermöglichen, von dem Hauptabschnitt (204) in einer ersten Position gelöst zu werden,
- ferner ein federndes Glied (222) umfasst, welches imstande ist, durch die Wirkung seiner Federkraft den Klappabschnitt (202) in einer zweiten Position auszurichten, und
- imstande ist, ferner ein Lösen des betreffenden Klappabschnitts (202) von dem Hauptabschnitt (204) innerhalb eines Positionsbereiches zu verhindern, der die zweite Position umfasst,
**gekennzeichnet**
ferner durch eine erste Verriegelungskombination, umfassend eine erste Ausnehmung (324) in dem Klappabschnitt (302) und einen entsprechenden ersten Zapfen (320) in dem Hauptabschnitt (304),
und eine zweite Verriegelungskombination, umfassend eine zweite Ausnehmung (326) in dem Hauptabschnitt und einen zweiten entsprechenden Zapfen (312) in dem Klappabschnitt, wobei das federnde Glied imstande ist, auf zumindest eine der beiden Verriegelungskombinationen einzuwirken.

2. Verriegelungsvorrichtung nach Anspruch 1, wobei die Ausnehmung (324) der ersten Verriegelungskombination und die Ausnehmung (326) der zweiten Verriegelungskombination antiparallel relativ zueinander in der ersten Position verlaufen
und wobei zumindest ein Zapfen oder eine Ausnehmung eine Gleitbahn (228, 230, 328) aufweist, bezüglich der das federnde Glied (222, 322) so angeordnet ist, dass es mit dieser zusammenpasst, um den Klappabschnitt in der zweiten Position bereitzustellen.

3. Verriegelungsvorrichtung nach Anspruch 2, wobei die Ausnehmungen (324, 326) in der ersten Position zumindest teilweise in einer Ebene vorgesehen sind, welche die Drehachse umfasst, um die der Klappabschnitt (302) in Bezug auf den Hauptabschnitt (304) klappbar ist.

4. Verriegelungsvorrichtung nach einem der vorhergehenden Ansprüche, wobei das federnde Glied (222) in dem Hauptabschnitt (204) vorgesehen ist.

5. Verriegelungsvorrichtung nach einem der vorhergehenden Ansprüche, wobei eine Gleitbahn (228, 230) in dem zweiten Zapfen (210, 212) vorgesehen ist.

6. Verriegelungsvorrichtung nach Anspruch 2 oder 3, wobei der Klappabschnitt (902) in eine dritte Position geklappt werden kann, in der das federnde Glied (222) durch die Wirkung seiner Federkraft den Klappabschnitt (902) dazu veranlasst, zumindest einen Teil des Hauptabschnitts (904) abzudecken.

7. Verriegelungsvorrichtung nach einem der vorhergehenden Ansprüche, wobei das federnde Glied eine Blattfeder ist.

8. Verriegelungsvorrichtung nach Anspruch 7, wobei die Blattfeder aus einem Metall besteht.

9. Verriegelungsvorrichtung nach Anspruch 8, wobei das Metall Federstahl ist.

10. Verriegelungsvorrichtung nach Anspruch 7, wobei die Blattfeder aus Kunststoff besteht.

11. Tragbares elektronisches Gerät mit einer Verriegelungsvorrichtung nach einem der vorhergehenden Ansprüche.

## Revendications

1. Mécanisme de verrouillage destiné à maintenir et libérer une section rabattable (202) et une section principale (204) d'un dispositif électronique portatif, la section rabattable étant fixée de manière amovible sur une section principale contenant des circuits électroniques, la section rabattable amovible étant montée repliable autour d'un axe de rotation par rapport à ladite section principale, dans lequel le mécanisme de verrouillage :
est conçu pour permettre à la section rabattable (202) d'être détachée de la section principale (204) dans une première position, et
comprend en outre un élément élastique (222) qui est conçu pour orienter, par l'action élastique dudit élément, la section rabattable (202) dans une deuxième position, et
est conçu en outre pour empêcher ladite section rabattable (202) d'être détachée de la section principale (204) sur un éventail de positions qui inclut la deuxième position,
**caractérisé en ce qu'**il comprend en outre une première combinaison de verrouillage comprenant un premier logement (324) dans la section rabattable (302) et un premier tenon (320) correspondant dans la section principale (304) et une deuxième combinaison de verrouillage comprenant un deuxième logement (326) dans la section principale et un deuxième tenon (312) correspondant dans la section rabattable, l'élément élastique étant conçu pour agir sur au moins l'une desdites deux combinaisons de verrouillage.

2. Mécanisme de verrouillage selon la revendication 1, dans lequel le logement (324) de la première combinaison de verrouillage et le logement (326) de la deuxième combinaison de verrouillage sont antiparallèles l'un à l'autre dans la première position et au moins un tenon ou logement comprend une voie (228, 230, 328) avec laquelle l'élément élastique (222, 322) est conçu pour s'adapter afin d'amener la section rabattable dans la deuxième position.

3. Mécanisme de verrouillage selon la revendication 2, dans lequel les logements (324, 326), dans la première position, sont au moins partiellement placés dans un plan qui comprend l'axe de rotation autour duquel la section rabattable (302) peut être repliée par rapport à la section principale (304).

4. Mécanisme de verrouillage selon l'une quelconque des revendications précédentes, dans lequel l'élément élastique (222) est implanté dans la section principale (204).

5. Mécanisme de verrouillage selon l'une quelconque des revendications précédentes, dans lequel une voie (228, 230) est ménagée dans ledit deuxième tenon (210, 212).

6. Mécanisme de verrouillage selon la revendication 2 ou 3, dans lequel la section rabattable (902) peut être rabattue dans une troisième position, dans laquelle l'élément élastique (222), par l'effet de son élasticité, pousse la section rabattable (902) à couvrir au moins partiellement la section principale (904).

7. Mécanisme de verrouillage selon l'une quelconque des revendications précédentes, dans lequel l'élément élastique est un ressort à lame.

8. Mécanisme de verrouillage selon la revendication 7, dans lequel le ressort à lame est fait de métal.

9. Mécanisme de verrouillage selon la revendication 8, dans lequel le métal est de l'acier à ressorts.

10. Mécanisme de verrouillage selon la revendication 7, dans lequel le ressort à lame est fait de matière plastique.

11. Dispositif électronique portatif comprenant un mécanisme de verrouillage selon l'une quelconque des revendications précédentes.
